# EUROPEAN PATENT SPECIFICATION

(11) **EP 1 901 907 B1**
(45) Date of publication and mention of the grant of the patent: **29.07.2009**
(21) Application number: 06763309.9
(22) Date of filing: 29.05.2006
(51) Int. Cl.: B29C 47/14, B29C 47/70

(54) **DIE FOR PRODUCING VERY WIDE, FLAT, PLASTIC-BASED STRUCTURES, AND USE OF IT**
MATRIZE ZUR HERSTELLUNG SEHR BREITER UND FLACHER STRUKTUREN AUF KUNSTSTOFFBASIS, SOWIE VERWENDUNG
FILIERE DESTINEE A LA PRODUCTION DE STRUCTURES EN PLASTIQUE TRES LARGES ET PLATES, ET SON UTILISATION

(30) Priority: 30.05.2005 FR 0505428
(43) Date of publication of application: 26.03.2008
(73) Proprietor: SOLVAY (SOCIETE ANOMYME), 1050 Bruxelles (BE)
(72) Inventor: DEHENNAU, Claude, B-1410 Waterloo (BE); GRANDJEAN, Dominique, B-1020 Brussels (BE); LANGOUCHE, Florentin, B-3000 Leuven (BE)
(74) Representative: Jacques, Philippe
(86) International application number: PCT/EP2006/062650
(87) International publication number: WO 2006/128837

(56) References cited:
- DE-A1- 4 133 394
- GB-A- 1 282 876
- US-A- 2 734 224
- PATENT ABSTRACTS OF JAPAN vol. 012, no. 236 (M-715), 6 July 1988 (1988-07-06) & JP 63 028622 A (KAO CORP; others: 01), 6 February 1988 (1988-02-06)

## Description

The present invention relates to a die for producing very wide, flat, plastic-based structures, more particularly thermoplastic polymer-based structures. It also relates to an apparatus for forming three-dimensional plastic-based structures, comprising such a die.

Many industries (the automobile, structural engineering, shipbuilding, etc.) use flat structures (plates, sheets, webs) that are very wide (more than a metre and even up to two or three metres) fashioned from plastics. The plastics used to form these structures are often thermoplastic polymers, such as PVC for example, which have a low thermal stability (referred to as being "heat-sensitive") and/or are usually viscous, even at high temperature. When these polymers flow into a very wide conventional flat die, the edges of the structure obtained are degraded after several hours of extrusion due to the excessive time spent in the transverse molten polymer distribution channel. In addition, the temperature at the centre and the extremities of the structure is very difficult to regulate due to the high flow rates used and the excessive transit time of the molten polymer from the centre to the extremities of the die. These constraints therefore mean that the width of the flat dies for the use of these polymers is limited.

This limited width is the source of another disadvantage when the flat structures obtained are intended to be subsequently melt-processed by another die in order to obtain three-dimensional structures such as various sections or plates called "honeycomb" plates (having circular, elliptical or polygonal cells that are perpendicular to the plane of the plate). Thus, when a flat die, called an upstream die, feeds another die, called a downstream die, producing sections, the flow rate of the web through the slot of the upstream die cannot be controlled at every point in order to feed, correctly and evenly, across the whole width, the downstream die, which does not allow the formation of a uniform structural element.

Indeed, an extrusion apparatus has already been described (document US-A-3 849 051) for producing very wide sheets comprising a flat die fed via at least two feed ducts placed in opposition on one and the same axis making it possible to introduce a thermoplastic into one and the same distribution duct terminating in a slot at the exit of the thermoplastic. This opposing configuration of the two feed ducts is however unsuitable for the use of heat-sensitive thermoplastics that will necessarily stagnate in the zone where they join.

Another flat die feed arrangement has been described in document FR-A-1285580. In the proposed geometry, several feed ducts are provided. However, the material in the molten state is distributed via a tree structure of ducts feeding the molten material to the exit of each tree structure over the desired width. This type of distribution is also unsuitable for heat-sensitive thermoplastics and does not make it possible to even out the flow of material across the whole width of the upstream die.

Document FR-A-1 360137, for its part, although it indeed describes a method for extruding very wide sheets, made of viscous or heat-sensitive thermoplastics, according to which the flow of thermoplastic material originating from at least one plasticizing unit is divided into several secondary streams, channelled towards one or more extrusion dies via flexible connection tubes resistant to the extrusion pressure, provides no details, that can be exploited by those skilled in the art, about the manner in which the flow is distributed and balanced from each flexible tube to the exit of the die and proposes no means for controlling the distribution of the streams emanating from each flexible tube.

Note finally that other documents (such as patents US 2 734 224 and GB 1 282 876 for example) propose dies called "multiple" dies like those of the invention, but, in the latter, the flow dividers (i.e. for the flow of molten material exiting the extruder) are made in a single piece with the die. The main drawback in such dies is that it is impossible to perfectly balance the streams in each branch and that any imbalance can only increase over time during industrial usage. Specifically, because the flow divider is machined in the very block of the flat die, the flows cannot be independently regulated according to the observed imbalances.

The present invention thus aims to solve the problem of producing very wide, flat structures of uniform, plastic-based composition. To do this, its object is to provide a "multiple" die (i.e. one with at least two feed channels) that is perfectly balanced for the production of these flat structures and that is easy to adjust. It also aims to solve the problem of the formation of three-dimensional structures, such as sections and "honeycomb" structures, based on these flat structures.

A first object of the present invention is thus to provide a die for producing very wide, flat, plastic-based structures, consisting of a base and a cover, and comprising:
- a plurality of ducts for feeding molten plastic, opening into a distribution channel;
- a longitudinal outflow slot for outputting the molten plastic in the form of a substantially flat structure;
   the distribution channel and the outflow slot communicating via a plurality of distributors of generally triangular section having a downstream apex, near to which a feed duct emerges, and two upstream apexes forming intersections of the distribution channel and of the outflow slot, each feed duct being fed with molten plastic via an upstream orifice of the die that is specific thereto so that the die comprises several inlet orifices for the molten plastic. This feature therefore implies that the flow dividers are situated upstream of the die, and are not incorporated therein, which makes it possible to modify them easily in order to balance the die without having to modify the latter.

The die according to the invention results from the association of a base and a cover of any shape, usually hexahedral. Where they join, this base and this cover define a flow plane (P) and a flow direction (E) of the molten plastic, from upstream to downstream of the said die. This flow direction is usually substantially perpendicular to the upstream and downstream faces of the said base and to the outflow slot for the molten plastic.

The ducts may be situated in different planes from the flow plane (P), at different distances from one another or in different directions from the flow direction (E). Preferably, however, these ducts are situated in the flow plane (P), at an equal distance from one another and oriented in a direction substantially parallel to the flow direction (E). The ducts may have any cross section allowing a substantially uniform flow of the molten plastic. Preferably, this section is circular.

The die according to the invention comprises at least two ducts. Usually, it comprises more than two ducts, preferably three to five ducts, substantially parallel to one another and equidistant. Usually, for practical reasons, the number of ducts does not exceed ten and preferably does not exceed six.

According to the invention, each duct is fed with molten plastic by an extrusion device, and this is done via an upstream orifice that is specific thereto (that is to say that each duct corresponds to a feed orifice in the die), which means that the flow or flows coming from the extruder (or the extruders) are divided upstream of the die.

In other words : according to the invention, the flow dividers that divide the streams of the exit of the extrusion device(s) to each of the distributors are placed outside of the flat die and are elements for connection between the die and the extrusion device.

These dividers preferably have flow control systems for each duct of the said divider. Preferably, this regulation of the flow rates is achieved by adjustable heat regulators on each duct, the regulators making it possible to compensate for deviations in flow rate of about 2 %, even of about 5 % and even, in certain cases, of about 10 %, so that the flow rates at the exit of the die are identical (in practice : to within 1 %, or even to within 0.1 %) opposite each distributor.

The dividers are preferably in a Y configuration with no junction elbow between two parts to be assembled, the bar of the Y connecting to the extruder and the branches on each of the distributors. If there are more than 2 distributors per extruder, the number of branches is equal to the number of distributors, and they are preferably of the same length and, most particularly preferably, also of the same diameter.

According to the invention, the extrusion device may consist of one or more extruders delivering the molten plastic. This therefore means that an extruder may feed more than one duct. Preferably, one and the same extruder may feed two and even three ducts. It is general practice to avoid feeding more than four ducts by the same extruder so as to prevent the problems of unevenness in the streams of molten plastic encountered with the devices of the prior art. For this purpose, moreover, the ducts may be fitted with independent valves for regulating the respective flow rates of the extruders.

In the die according to the invention, the ducts open into a distribution channel which feeds the molten material to a plurality of distributors of generally triangular section. According to this conformation, the distribution channel is a longitudinal groove having substantially the shape of a zigzag which borders the various distributors. The latter have a downstream apex, near to which a duct emerges, and two upstream apexes that are in contact with the outflow slot. The distribution channel and the distributors have the purpose of distributing the molten plastic progressively from each duct to the outflow slot.

In this configuration, the distributors are placed side by side over substantially the whole width of the outflow slot. Preferably they have substantially the same size and the same shape (to within the manufacturing tolerances).

Although these distributors are, as previously mentioned, of a generally triangular section (via a plane parallel to the flow plane), it must be understood that, in the present description, this definition also covers distributors having for example a substantially U-shaped section, a section called "fishtail" or else a section called "coat hanger". The latter are shown for example by Chris Rauwendaal in "Polymer Extrusion", Hanser Publishers, 1990, page 444.

To avoid any adhesion and/or degradation of the molten plastic in the die according to the invention, the inner surface of the ducts and/or of the distribution channel and/or of the outflow slot may be coated with a web of non-stick material such as PTFE, ceramic, etc.

The available thickness for flow of the molten plastic in the outflow slot is preferably adjustable, so as to best even out the residence time and the stresses and temperatures to which the molten material is subjected in the flow.

In order to make this thickness variable, "back-pressure bars" (hereinafter called more simply "bars") may be placed in the base of the die according to the invention, preferably substantially in the centre of the outflow slot, opposite each distributor, for example in a groove of any (but preferably trapezoidal) section. These bars, whose upper face in contact with the molten plastic is substantially rectangular, are well known to those skilled in the art; they are described for example as "choker bars" on page 444 of "Polymer Extrusion" mentioned above.

Usually, the number of bars equals the number of distributors, each bar being adjustable independently and separately from the bars of the directly adjacent distributors. These bars can usually be moved, in a known manner, perpendicular to the flow plane (P), according to the desired thickness of the flat structure and according to the differences in temperature, in flow rate and in pressure, in order to balance the streams of molten plastic and obtain, at the exit of the outflow slot, a structure of uniform thickness.

In practice, to embody this variant of the invention, it is possible first to calculate the ideal theoretical thickness at the centre of the slot by any known computational means (for example by using one of the many melt-flow simulation programs available on the market) and then to position the bars accordingly. Alternatively, or in addition, it is possible to work towards the ideal thickness by iterative tests.

The total length of the outflow slot, in the flow plane (P) and in a direction perpendicular to the flow direction (E), is usually greater than one metre, preferably greater than two and even three metres, thus making it possible to form a very wide flat structure easily.

As for the width of the slot (still the dimension in the flow plane (P), but in the flow direction (E) this time), this is usually a matter of mm, or even cm. It is usually however less than 30 cm, even 20 cm and preferably less than 10 cm.

The plastic that can be converted into a flat structure by means of the die according to the invention may be any thermoplastic polymer, including thermoplastic elastomers, and their blends. "Polymer" means both homopolymers and copolymers (binary or ternary copolymers in particular). Examples of such copolymers are, in a non-limiting manner, random copolymers, sequenced copolymers, block copolymers and graft copolymers.

Any type of thermoplastic polymer or copolymer whose processing temperature is lower than the decomposition temperature is suitable for use in the die according to the invention. Synthetic thermoplastics that have a melting range spread over at least 10 degrees Celsius are particularly suitable. As an example of such materials, there are those that exhibit polydispersity in their molecular weight.

In particular, polyolefins, polyvinyl halides (PVC - PVDF), thermoplastic polyesters, aliphatic or aromatic polyphenylsulphones (PPSU), polyketones, polyamides (PA) and their copolymers may be used. Polyolefins [and in particular polypropylene (PP) and polyethylene (PE)], PPSUs, PAs and PVCs have given good results. The die according to the invention is most particularly suitable for converting heat-sensitive thermoplastic polymers, such as PVC, into very wide, flat structures.

The die according to the invention applies advantageously to the conversion of polymers having a melt viscosity (measured at the temperature of the polymer in the die and at 0.1 rad/s) equal to or greater than 2500 Pa.s, preferably 3000 Pa.s, even 4000 Pa.s.

The die according to the invention may be used for converting a single polymer, a blend of polymers or copolymers or a blend of polymeric material(s) with various additives (stabilizers; plasticizers; pigments; inorganic, organic and/or natural or polymeric fillers, etc.). These polymers may have undergone various treatments such as expansion, orientation, etc. The die according to the invention may be used for converting thermoplastic polymers comprising blowing agent and, therefore, for making expanded or foamed cellular structures, for example in an apparatus that will be described hereinafter.

The very wide, flat structure, exiting the slot of the die according to the invention, may itself be converted for final forming by any known appropriate rework system such as embossing rolls, polishing rolls, calendering rolls, etc. The die according to the invention may also be associated with and feed other forming means such as calibrated openings making it possible to produce, for example, flat sheets from 0.2 to 20 mm thick.

According to a preferred variant, the die according to the invention described above, hereinafter called the "upstream die", may feed a molten flat structure to forming means more simply called hereinafter, a "downstream die" the upstream die and the downstream die thus interacting to form an apparatus for forming plastic-based three-dimensional structures, which apparatus constitutes a second subject of the present invention.

In the most general configuration of this apparatus, the very wide, flat structure made of molten plastic, delivered through the slot of the upstream die, feeds the downstream die for forming the material into a three-dimensional structure. In the present description, "three-dimensional structure" is intended to be any plastic structure with three dimensions, delivered by any die with an appropriate profile performing the function of a downstream die in the apparatus according to the invention. This three-dimensional structure may also include hollow bodies joined together placed parallel to the plane of the flat structure from which it is derived.

Preferably, the three-dimensional structures concerned are cellular structures called "honeycomb" structures as defined hereinabove. Downstream dies for obtaining such structures are described for example in documents EP 1 009 625 and DE 1779330, whose content for this purpose is incorporated by reference into the present application. This variant of the invention gives good results with PVC-based cellular structures.

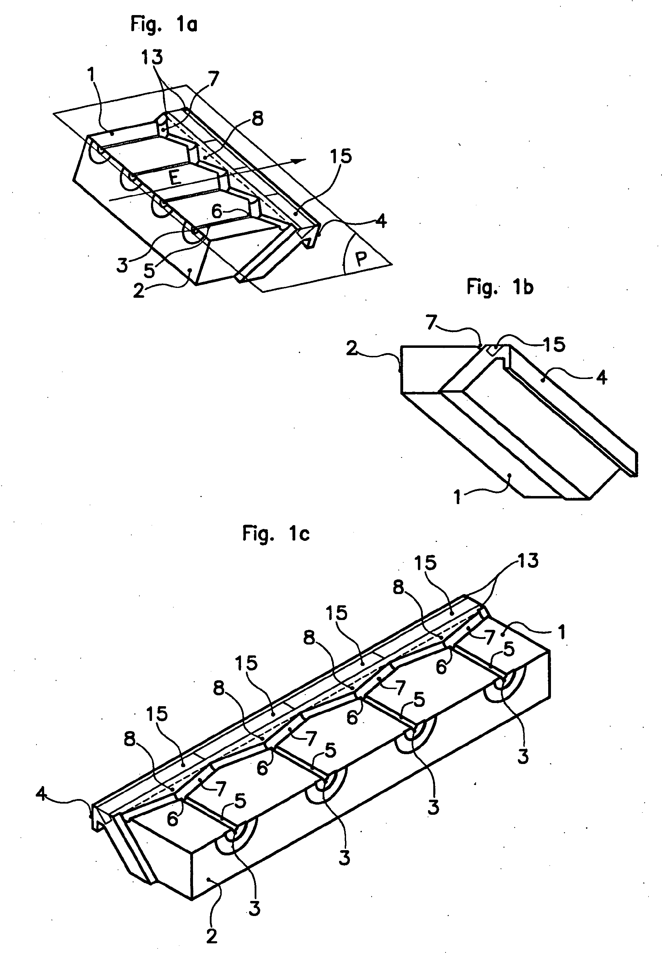

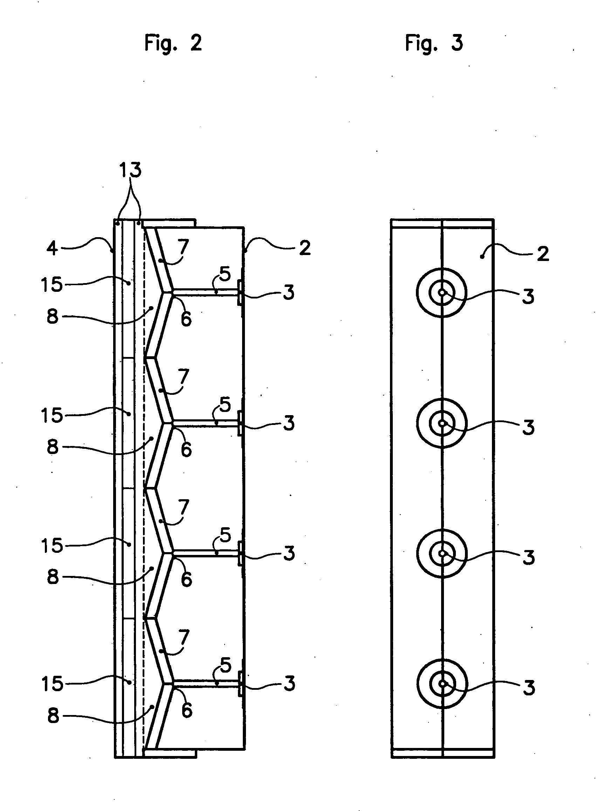

One particular embodiment of the invention will now be illustrated by making reference to the drawings accompanying the present description. These drawings consist of the appended Figures 1 to 4 representing schematically a typical embodiment of the die according to the invention.

Figures la, 1b and 1c are, respectively, views in perspective, in side elevation from below and in rear elevation, of a hexahedral base intended to form, with a cover, also hexahedral, a die inside which a molten plastic flows in as many distribution channels and triangular-section distributors as there are plastic feed ducts, and exists via an outflow slot in the form of an even flow of molten material.

Figure 2 is a top view of the base of Figures 1.

Figure 3 is a view of the upstream edge and particularly of the inlet orifices of the ducts for feeding the plastic in the die of Figure 1.

Figure 4 is a view in cross section of a die formed by the association of the base of Figures 1 to 3 and a cover.

In the particular embodiment of the die represented in the figures, the base 1 of the flat die has an upstream edge 2 through which the molten plastic arrives via inlet ducts (not shown) and enters through four orifices 3 in the die. The molten plastic exits through the downstream edge 4. The upper portion of the base 1 defines a flow plane (P) (represented only in Figure la) in which the web of usually flat plastic flows inside the die 1 in the flow direction (E) (shown only in Figure la).

The flat die shown comprises four ducts 5 for feeding the molten plastic, which are placed parallel to and equidistant from one another and which extend in the flow plane (P) parallel to the flow direction (E). The feed ducts 5 each comprise a downstream orifice 6 for the discharge of the plastic to a distribution channel 7 extending in the flow plane in a longitudinal direction (in zigzag form) of distribution generally perpendicular (taking account of its zigzag shape) to the flow direction (E). Each orifice 3 of a feed duct 5 is connected upstream to a device (not shown) for extruding the plastic.

The base also comprises an outflow slot 13 extending along triangular distributors 8 situated downstream of the distribution channel 7. Each feed duct 5 thus makes it possible to guide a flow of plastic, via its downstream orifice 6, to the distribution channel 7, each portion of which spreads the molten material onto a triangular distributor 8, all the triangular distributors 8 interacting in order to form the common outflow slot 13.

In the embodiment shown, the use of four feed ducts 5, four portions of distribution channel 7 and four V-shaped triangular distributors 8 makes it possible to produce a uniform feed of plastic, that is to say to obtain a continuous feed and a temperature distribution, flow rate distribution and pressure distribution that are uniform and identical at all points at the exit of the outflow slot 13.

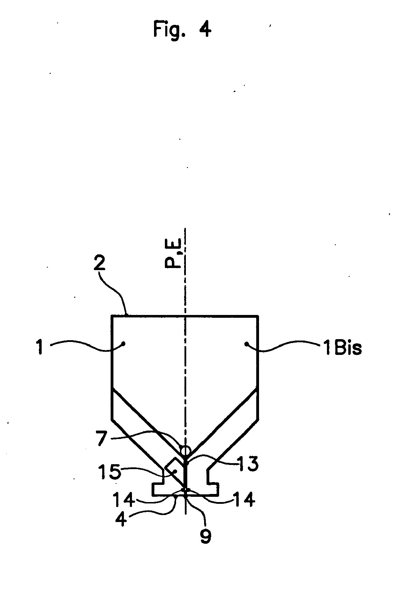

In Figure 4, it can be seen that the outflow slot 13 comprises two surfaces 14, respectively included in the base 1 and in the cover 1bis of the die, and extending away from one another parallel to the flow plane (P). The outflow slot 13 makes it possible to guide the flowing molten plastic uniformly in the flow direction (E) via the downstream pouring orifice 9 to form a web whose width will correspond substantially to the entrance width of the downstream die of an apparatus (not shown) for forming three-dimensional structures.

To control and regulate the thickness of the web and improve the control and regulation of the flow, while balancing the streams of material, the outflow slot 13 comprises back-pressure bars 15 that can be moved perpendicular to the flow plane (P). Each back-pressure bar 15 is placed in the centre of the outflow slot 13 opposite each triangular distributor 8, so as to be able to be moved independently of the adjacent back-pressure bars 15 by conventional adjustment means (not shown) placed beneath the base, depending on the differences in temperature, flow rate and pressure, in order to balance the streams of material and obtain a uniform web of plastic at the die exit.

## Claims

1. Die, for producing very wide, flat, plastic-based structures, consisting of a base (1) and a cover (1bis), and comprising:
- a plurality of ducts (5) for feeding molten plastic, opening into a distribution channel (7);
- a longitudinal outflow slot (13) for outputting the molten plastic in the form of a substantially flat structure;
the distribution channel (7) and the outflow slot (13) communicating via a plurality of distributors (8) of generally triangular section having a downstream orifice (6), near to which a feed duct (5) emerges, and two upstream apexes forming intersections of the distribution channel (7) and of the outflow slot (13), **characterized in that** each feed duct (5) is fed with molten plastic via an upstream orifice (3) of the die that is specific thereto so that the die comprises several inlet orifices (3) for the molten plastic.

2. Die according to Claim 1, in which the distributors (8) are placed side by side over substantially the whole width of the outflow slot (13) and have substantially the same size and the same shape.

3. Die according to Claim 1 or 2, also comprising back-pressure bars (15) placed in a groove of the base (1) situated substantially in the centre of the outflow slot (13).

4. Use of a die according to any one of Claims 1 to 3, for producing very wide, flat, heat-sensitive thermoplastic polymer-based structures.

5. Use according to the preceding claim, in which the heat-sensitive polymer is a PVC (polyvinyl chloride).

6. Apparatus for producing three-dimensional plastic-based structures comprising a die according to any one of Claims 1 to 3 and forming means suitable for converting the flat structure issuing from the latter into a three-dimensional structure.

7. Use of the apparatus of Claim 6 for producing cellular structure.

8. Use according to the preceding claim, in which the cellular structures are PVC-based.

## Patentansprüche

1. Düse zur Herstellung sehr breiter, flacher Strukturen auf Kunststoffbasis, die aus einer Basis (1) und einer Abdeckung (1bis) besteht und Folgendes umfasst:
- mehrere Kanäle (5) zur Zuführung von Kunststoffschmelze, die in einer Verteilleitung(7) münden;
- einen Längsausströmschlitz (13) zur Abgabe der Kunststoffschmelze in Form einer im Wesentlichen flachen Struktur;
wobei die Verteilleitung (7) und der Ausströmschlitz (13) über mehrere Verteiler (8) mit einem allgemein dreieckigen Querschnitt in Verbindung stehen, die eine stromabwärtige Öffnung (6), in deren Nähe ein Zuführkanal (5) mündet, und zwei stromaufwärtige Scheitel aufweisen, die Schnittpunkte der Verteilleitung (7) und des Ausströmschlitzes (13) bilden, **dadurch gekennzeichnet, dass** jeder Zuführkanal (5) über eine ihm zugeordnete stromaufwärtige Öffnung (3) der Düse mit Kunststoffschmelze versorgt wird, so dass die Düse mehrere Einlassöffnungen (3) für die Kunststoffschmelze aufweist.

2. Düse nach Anspruch 1, wobei die Verteiler (8) über im Wesentlichen die ganze Breite des Ausströmschlitzes (13) nebeneinander angeordnet sind und im Wesentlichen die gleiche Größe und die gleiche Form aufweisen.

3. Düse nach Anspruch 1 oder 2, die des Weiteren Gegendruckstangen (15) umfasst, die in einer Nut der Basis (1) angeordnet sind, welche sich im Wesentlichen in der Mitte des Ausströmschlitzes (13) befindet.

4. Verwendung einer Düse nach einem der Ansprüche 1 bis 3 zur Herstellung sehr breiter, flacher, wärmeempfindlicher thermoplastischer Strukturen auf Polymerbasis.

5. Verwendung nach dem vorhergehenden Anspruch, wobei es sich bei dem wärmeempfindlichen Polymer um ein PVC (Polyvinylchlorid) handelt.

6. Vorrichtung zur Herstellung dreidimensionaler Strukturen auf Kunststoffbasis, die eine Düse nach einem der Ansprüche 1 bis 3 umfasst und Mittel bildet, die sich zum Umwandeln der aus Letzterer stammenden flachen Struktur in eine dreidimensionale Struktur eignen.

7. Verwendung der Vorrichtung nach Anspruch 6 zur Herstellung zellförmiger Strukturen.

8. Verwendung nach dem vorhergehenden Anspruch, wobei die zellförmigen Strukturen auf PVC basieren.

## Revendications

1. Filière pour la réalisation de structures planes de grande largeur à base de matière plastique, constituée d'un socle (1) et d'un couvercle (1bis), et comprenant :
- une pluralité de conduits d'alimentation (5) en matière plastique fondue débouchant dans un canal de distribution (7) ;
- une fente longitudinale d'écoulement (13) de la matière plastique fondue sous la forme d'une structure substantiellement plane ;
le canal de distribution (7) et la fente d'écoulement (13) communiquant par une pluralité de répartiteurs (8) de section généralement triangulaire ayant un orifice aval (6) près duquel débouche un conduit d'alimentation (5) et deux sommets amonts constituant des intersections du canal de distribution (7) et de la fente d'écoulement (13), **caractérisé en ce que** chaque conduit d'alimentation (5) est alimenté en matière plastique fondue via un orifice amont (3) de la filière, qui lui est spécifique, de sorte que la filière comprend plusieurs orifices (3) d'entrée pour la matière plastique fondue.

2. Filière selon la revendication 1, dans laquelle les répartiteurs (8) sont disposés côte à côte sur substantiellement toute la largeur de la fente d'écoulement (13) et ont sensiblement la même taille et la même forme.

3. Filière selon la revendication 1 ou 2, comprenant en outre des barres de contre pression (15) placées dans un gorge du socle (1) située sensiblement au centre de la fente d'écoulement (13).

4. Utilisation d'une filière selon l'une quelconque des revendications 1 à 3 pour la réalisation de structures planes de grande largeur à base de polymère thermoplastique thermosensible.

5. Utilisation selon la revendication précédente, dans laquelle le polymère thermosensible est un PVC (polymère du chlorure de vinyle).

6. Appareillage pour la réalisation de structures tridimensionnelles à base de matière plastique, comprenant une filière selon l'une quelconque des revendications 1 à 3 et des moyens de conformation aptes à transformer la structure plane issue de celle-ci en structure tridimensionnelle.

7. Utilisation de l'appareillage de la revendication 6 pour la réalisation de structures alvéolaires.

8. Utilisation selon la revendication précédente, dans laquelle les structures alvéolaires sont à base de PVC.
